# EUROPÄISCHE PATENTSCHRIFT

(11) **EP 2 478 949 B1**
(45) Veröffentlichungstag und Bekanntmachung des Hinweises auf die Patenterteilung: **03.01.2018**
(21) Anmeldenummer: 12000230.8
(22) Anmeldetag: 17.01.2012
(51) Int. Cl.: B01D 45/02, B01D 46/00, F02M 21/02, B01D 45/16

(54) **Vorrichtung zum Abscheiden von in gasförmigen Medien enthaltenen Fluiden, insbesondere öl aus Gaskraftstoffen für Verbrennungsmotoren**
Device for separating fluids contained in gaseous media, in particular oil from gas fuels for combustion engines
Dispositif de séparation de fluides comprenant des milieux gazeux, notamment de l'huile à partir de carburants gazeux pour des moteurs à combustion interne

(30) Priorität: 22.01.2011 DE 102011009232
(43) Veröffentlichungstag der Anmeldung: 25.07.2012
(73) Patentinhaber: Hydac Filtertechnik GmbH, 66280 Sulzbach/Saar (DE)
(72) Erfinder: Eberle, richard, 66399 Ormesheim (DE); Kreibig, Micha, 66780 Rehlingen-Siersburg (DE); Dewes, Markus, 66649 Oberthal (DE)
(74) Vertreter: Bartels & Partner

(56) Entgegenhaltungen:
- EP-B1- 1 884 651
- CN-Y- 201 351 587
- US-A1- 2006 060 174

## Beschreibung

Vorrichtung zum Abscheiden von in gasförmigen Medien enthaltenen Fluiden, insbesondere von Öl aus Gaskraftstoffen für Verbrennungsmotoren

Die Erfindung betrifft eine Vorrichtung zum Abscheiden von in gasförmigen Medien enthaltenen Fluiden, insbesondere von Öl aus Gaskraftstoffen für Verbrennungsmotoren, mit den Merkmalen im Oberbegriff von Anspruch 1.

Für den Betrieb von Kraftfahrzeugen werden anstelle von flüssigen Kraftstoffen (Benzin, Dieselöl) zunehmend Gaskraftstoffe benutzt, deren Einsatz sowohl ökonomische als auch ökologische, die Abgassituation betreffende Vorteile bietet. Um im Gastank von mit Erdgas betriebenen Kraftfahrzeugen eine größere Kraftstoffmenge zu speichern, ist es erforderlich, den Gaskraftstoff im Gastank unter einem hohen Druck von beispielsweise 200 bis 300 bar zu verdichten. Dabei besteht die Gefahr, dass der Gaskraftstoff mit Schmieröl des zur Betankung eingesetzten Verdichters verunreinigt wird. Hauptursache hierfür ist, dass bei Anstieg der Temperatur in den Hochdruckstufen der Verdichter Schmieröl verdampft und in gasförmiger Form oder als Aerosol in den Gaskraftstoff gelangt. Wenn dieser für den Betrieb des betreffenden Verbrennungsmotors wieder auf den hierfür geeigneten Gasdruck entspannt wird, dann kühlt sich der Gaskraftstoff ab, wodurch die mitgeführten Ölbestandteile kondensieren und in flüssiger Form oder als Aerosol im Gaskraftstoff enthalten sind. Für einen störungsfreien Betrieb des Verbrennungsmotors ist es daher erforderlich, in dem Zuleitungssystem zwischen dem Gastank und dem Verbrennungsmotor einen Ölabscheider vorzusehen, der üblicherweise auf der Niederdruckseite des Druckminderers vorgesehen ist, so das der Ölabscheider lediglich Druckfestigkeit gegen Niederdruck haben muß.

Ein für einen derartigen Einsatzzweck vorgesehener Ölabscheider ist aus dem Dokument EP 1 884 651 B1 bekannt. Diese Vorrichtung weist ein dreiteiliges Gehäuse auf, dessen Mittelteil den Einströmraum bildet, der durch eine obere Wand und eine untere Wand, die zueinander parallele Ebenen bilden, sowie durch eine sich entlang der Gehäusehochachse erstreckende Seitenwand begrenzt ist. Obere Wand und untere Wand bilden ein Trennelement gegenüber einem darüberliegenden Gehäuseteil, der einen Filterraum bildet, sowie einem darunterliegenden dritten Gehäuseteil, der Sammelräume für abgeschiedenes Öl beinhaltet. Obere Wand und untere Wand des Einströmraumes, die als Trennelement dienen, weisen jeweils Durchlässe zum Filterraum bzw. zu den Fluidsammelräumen auf. Beim Betrieb der bekannten Vorrichtung gelangen Ölbestandteile, die in den Einströmraum durch Schwerkraftabscheidung aus dem Gaskraftstoff abgeschieden sind, über die Durchlässe der unteren Wand in den ersten Fluidsammelraum, bevor der Gaskraftstoff durch die Durchlässe in der oberen Wand des Einströmraumes zum Filterraum gelangt. Nach Durchströmen des Filtermediums des Filterelementes durch Koaleszenz und Schwerkraft gelangt weiter abgeschiedenes Öl in den an der Reinseite des Filterelementes angeschlossenen zweiten Fluidsammelraum, der sich im unteren Gehäuseteil, gesondert von dem ersten Fluidsammelraum, befindet.

Ein Öltank geht aus der US 2006/0060174 A1 hervor. Eine Filtervorrichtung wird durch die CN 201351587 Y aufgezeigt.

Der Erfindung liegt die Aufgabe zugrunde, eine Abscheidevorrichtung der besagten Art zur Verfügung zu stellen, die sich im Vergleich zum Stand der Technik durch verbesserte Betriebseigenschaften auszeichnet.

Erfindungsgemäß ist diese Aufgabe durch eine Vorrichtung gelöst, die die Merkmale des Patentanspruches 1 in seiner Gesamtheit aufweist.

Demgemäß besteht eine wesentliche Besonderheit der Erfindung darin, dass der in den Einströmraum führende Gehäuseeingang derart tangential zur Innenwand des Einströmraumes gerichtet ist, dass in diesem eine eine Fluidabscheidung durch Zentrifugalkräfte bewirkende Drallströmung erzeugt ist, und dass der zweite Fluidsammelraum mit dem Filterelement ein einstückiges Bauteil bildet. Während beim Stand der Technik die Abscheidung in der die erste Abscheidestufe bildenden Einströmkammer durch Gravitation erfolgt, bildet der Einströmraum bei der Erfindung mittels der Erzeugung einer Drallströmung einen Zyklonabscheider, so dass in der ersten Stufe eine erheblich verbesserte Abscheidewirkung erreicht wird. In Verbindung mit der in der zweiten Stufe am Filterelement stattfindenden weiteren Abscheidung ist eine insgesamt verbesserte Aufbereitung des über den Ausströmanschluss abgegebenen Mediums erreichbar.

Der zweite Fluidsammelraum bildet mit dem Filterelement ein einstückiges Bauteil. Hieraus erwachsen mehrere weitere Vorteile. So wird bei jedem Wechsel des Filterelementes auch das Auffangvolumen des an der Reinseite befindlichen Sammelraumes zusammen mit dem Filterelement erneuert. Beim Stand der Technik muss bei einem Filterelementwechsel in einem zusätzlichen Arbeitsgang der an der Reinseite angeschlossene Sammelraum entleert werden, um für den Betrieb mit dem neuen Filterelement wieder ein entsprechendes Auffangvolumen zur Verfügung zu stellen. Ein eventuell nicht vollständig entleerter Sammelraum hat beim Stand der Technik ein zu geringes, anfängliches Auffangvolumen zur Folge, was möglicherweise nicht bis zum nächsten Wartungsintervall ausreicht, so dass Öl mit dem Gaskraftstoff zum Motor gelangen kann. Ein weiterer Vorteil ist die verbesserte Wartungsfreundlichkeit, weil der an das Filterelement angeformte zweite Sammelraum eine verlängerte Handhabe bildet, an der für den Filterwechsel das Filterelement bequem gegriffen und aus dem Filtergehäuse herausgezogen werden kann.

Bei einem besonders bevorzugten Ausführungsbeispiel sind die Wände des Einströmraumes, die die Trennelemente zwischen Einströmraum und dem Filterraum sowie dem ersten Fluidsammelraum bilden, einstückige Bestandteile des Filterelementes. Dieses bildet somit nicht nur den zweiten Sammelraum als integralen Bestandteil, sondern mit oberer und unterer Trennwand auch die axiale Begrenzung des Einströmraumes aus, so dass das beim Stand der Technik erforderliche, gesonderte Gehäusemittelteil entfällt.

In besonders vorteilhafter Weise ist das bei der Filtration von seiner Außenseite zu seinem inneren Filterhohlraum hin durchströmbare Filterelement auf einer die obere Wand des Einströmraumes bildenden Scheibe angeordnet, die am unteren Ende des Filterhohlraumes eine Öffnung besitzt, an die sich der zweite Fluidsammelraum in Form eines sich entlang der Hochachse des Filterelementes erstreckenden, mit der Scheibe einstückigen Topfes anschließt.

Mit besonderem Vorteil kann hier die Anordnung so getroffen sein, dass die untere Wand des Einströmraumes durch eine zweite, sich einstückig an die Außenseite des Topfes anschließende Scheibe gebildet ist. In diesen als die Trennelemente fungierenden Scheiben befinden sich die jeweiligen Durchlässe, die vom Einströmraum zum Filterraum und vom Einströmraum zum ersten Fluidsammelraum führen.

Bei besonders vorteilhaften Ausführungsbeispielen weist das Gehäuse ein glockenartiges Oberteil mit dem Ausströmanschluss, mit dem das obere Ende des Filterhohlraumes des in Funktionsposition befindlichen Filterelementes in abgedichtete Fluidverbindung kommt, sowie an seiner Innenseite eine Stufe für die Anlage des Umfangsrandes der ersten oberen Scheibe auf.

Dabei kann die Anordnung so getroffen sein, dass das Gehäuse ein Verschlussteil aufweist, das unter Bildung einer Abdichtung in das untere, offene Ende des glockenartigen Oberteils derart einschraubbar ist, dass es mit seinem Endrand an der unteren, zweiten Scheibe anliegt.

In besonders vorteilhafter Weise kann das Verschlussteil an seinem Bodenteil nach innen vorstehende Zentrierkörper aufweisen, zwischen denen der Bodenbereich des den zweiten Fluidsammelraum bildenden Topfes zentriert aufnehmbar ist, wobei der übrige, den Topf umgebende Innenraum des Verschlussteils den ersten Fluidsammelraum bildet. Bei vom Gehäuseoberteil abgenommenem Verschlussteil ist dessen Innenraum und damit der erste Fluidsammelraum besonders bequem für Reinigungsarbeiten zugänglich, weil sich kein zweiter Sammelraum, da er am Filterelement verbleibt, in den zu reinigenden Bereich erstreckt, in dem sich lediglich die kleinen, nicht hindernden Zentrierkörper befinden.

Nachstehend ist die Erfindung anhand eines in der Zeichnung dargestellten Ausführungsbeispiels im Einzelnen erläutert. Es zeigen:
- Fig. 1: einen Längsschnitt des Ausführungsbeispiels der erfindungsgemäßen Vorrichtung;
- Fig. 2: in gegenüber Fig. 1 geringfügig vergrößerter Darstellung einen Längsschnitt lediglich des Filterelements des Ausführungsbeispiels;
- Fig. 3: eine perspektivische Schrägansicht des längs aufgeschnittenen Filterelements; und
- Fig. 4: eine perspektivische Schrägansicht des im Winkel von 90° längs geschnittenen Ausführungsbeispiels der Vorrichtung.

Nachstehend ist die Erfindung am Beispiel einer Erdgas-Filtervorrichtung für die Kraftstoffversorgung eines Verbrennungsmotors erläutert. Die Vorrichtung weist ein als Ganzes mit 1 bezeichnetes Filtergehäuse auf, das zweiteilig aus einem Gehäuseoberteil 3 in Form einer runden Glocke und einem unteren Verschlussteil 5 besteht, das in das untere, offene Ende des Oberteils 3 einschraubbar ist. Dabei übergreift der mit Innengewinde versehene Endabschnitt 7 des Oberteils 3 den Verbindungsabschnitt 9 des Unterteils 5, so dass im eingeschraubten Zustand sich der Endrand 11 des Verschlussteils 5 innerhalb des Gehäuseoberteils 3 in einem Abstand von dessen unterem Ende befindet. In der Nähe dieses Endes ist ein Dichtelement 17 zur Gehäuseabdichtung angeordnet.

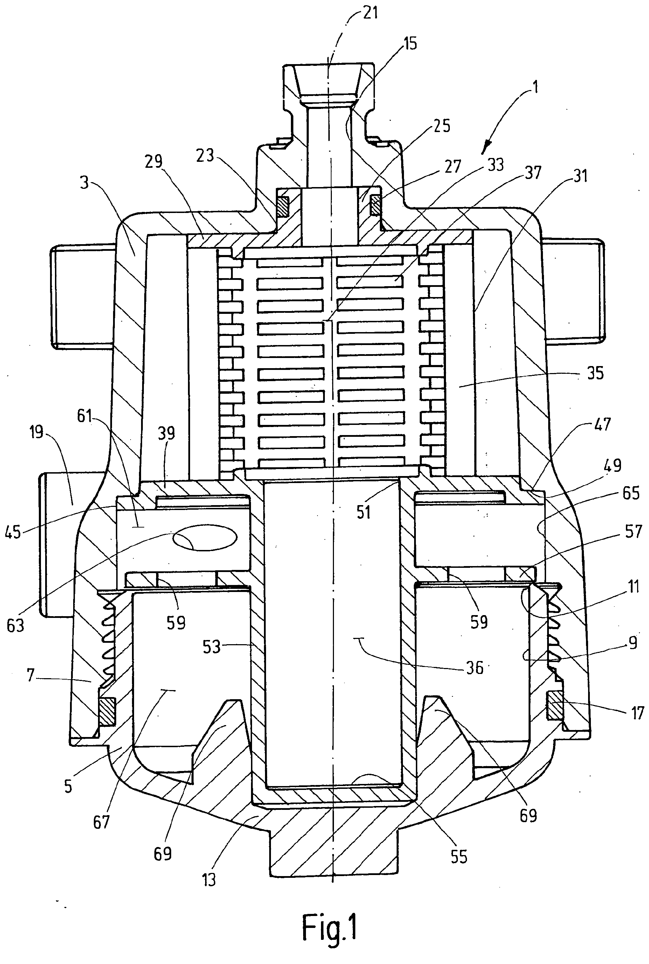

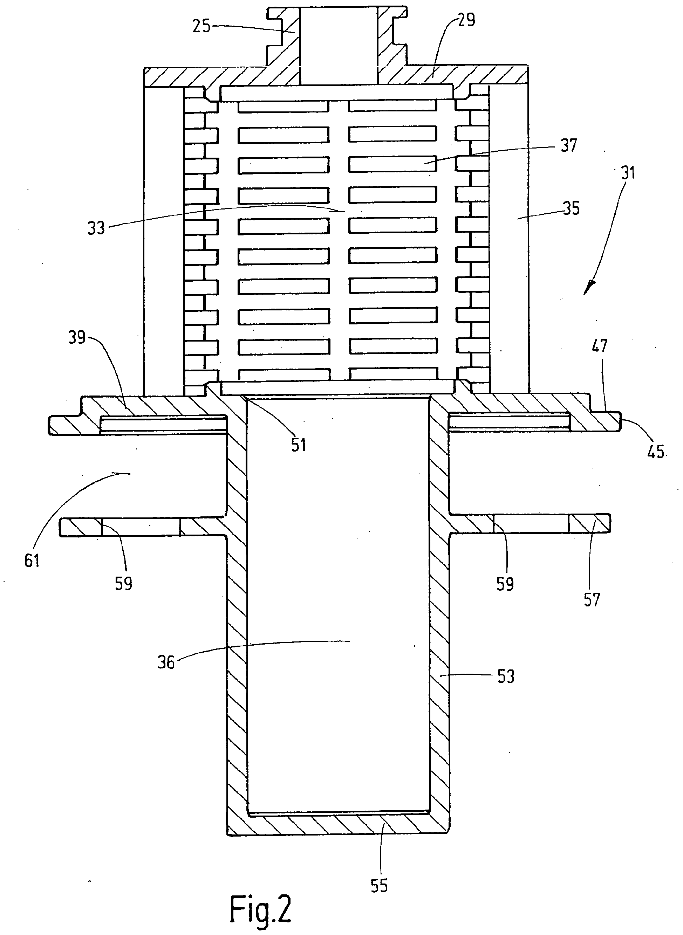

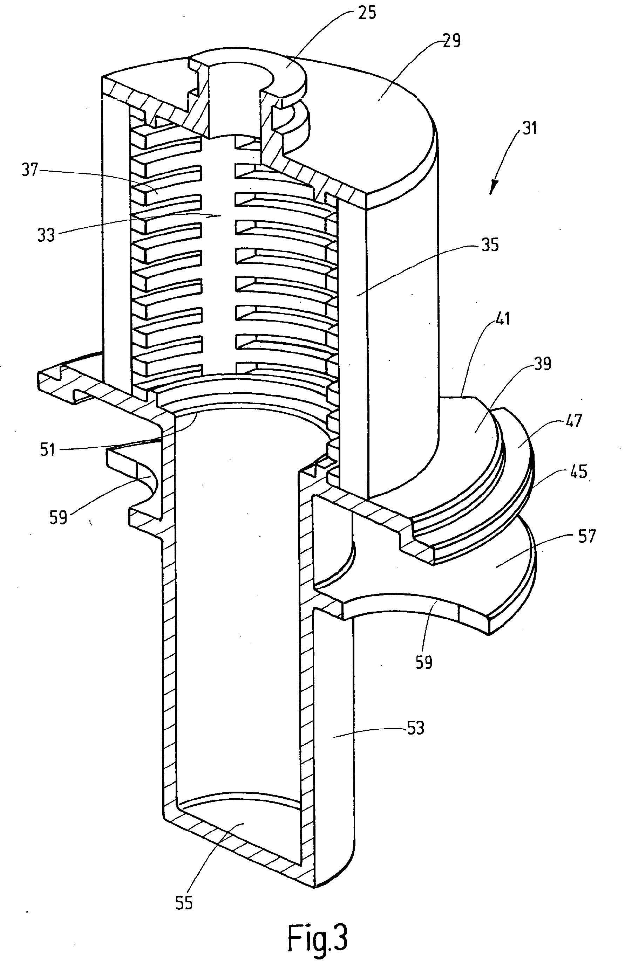

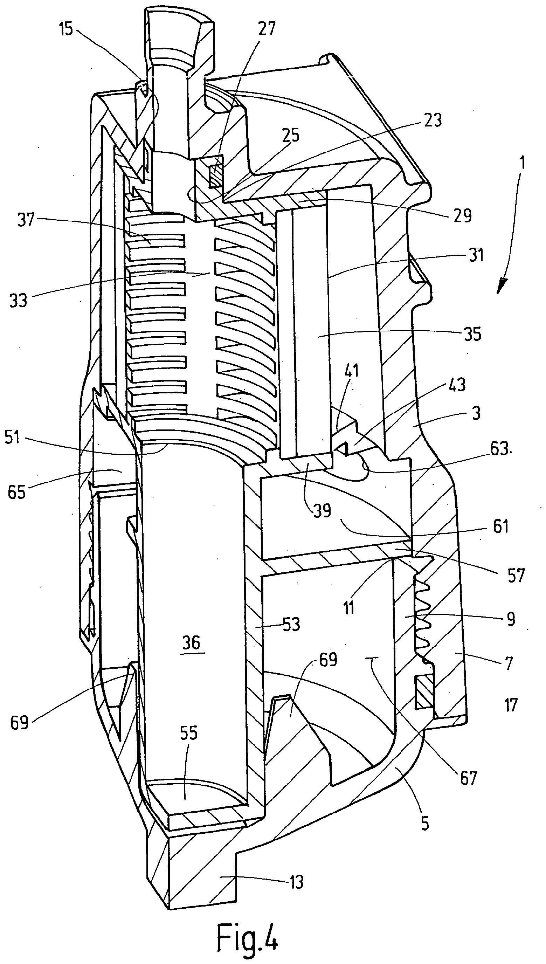

Während das Verschlussteil 5 an seinem Bodenbereich 13 geschlossen ist, weist das Gehäuseoberteil 3 einen Ausströmanschluss 15 sowie einen Gehäuseeingang 19 auf. Der Anschluss 15 befindet sich an der Oberseite (Blickrichtung entsprechend Fig. 1 und 4) des Gehäuseoberteils 3 in zentraler Lage bezüglich der Hochachse 21 der Vorrichtung. Der Ausströmanschluss 15 weist eine innere Erweiterung 23 auf, die eine Art Elementaufnahme bildet, in der ein Stutzen 25 mit Dichtelement 27 aufnehmbar ist. Der Stutzen 25 befindet sich an einer Endplatte 29 eines Filterelementes, das in den Fig. 2 und 3 gesondert dargestellt und als Ganzes mit 31 bezeichnet ist. Bei in Funktionsposition befindlichem Filterelement 31, siehe Fig. 1 und 3, ist der Ausströmanschluss 15 über den Stutzen 25 in unmittelbarer Fluidverbindung mit dem inneren Filterhohlraum 33 des Filterelements 31, der bei der Filtration die Reinseite bildet.

Nähere Einzelheiten des Filterelements 31 sind insbesondere aus Fig. 2 und 3 deutlicher ersichtlich. Das bei der Filtration von außen zum inneren Filterhohlraum 33 hin durchströmbare Filterelement 31 weist für das hohlzylinderförmige Filtermedium 35 eine Stützstruktur auf, die ein fluiddurchlässiges Stützrohr 37 bildet, das den inneren Filterhohlraum 33 umgibt und außenseitig vom Filtermedium 35 umgeben ist. Dieses Stützrohr 37 erstreckt sich von der oberen Endplatte 29 bis zu einer Scheibe 39, die, ähnlich wie die obere Platte 29, einen Abschluss für das betreffende Ende des Filtermediums 35 bildet, jedoch einen größeren Durchmesser als die Endplatte 29 besitzt. Genauer gesagt, hat die Scheibe 39 die Form einer unvollständigen, d.h. Unterbrechungen 41 (siehe Fig. 3) aufweisenden Kreisscheibe, wobei durch diese Unterbrechungen 41 Durchlässe 43 (Fig. 4) gebildet sind, die einen Mediendurchstrom durch die Scheibe 39 ermöglichen. An ihrem Umfangsrand 45 bildet die Scheibe 39 eine Stufe 47, die, wenn das Filterelement 31 in seiner Funktionsposition im Filtergehäuse 1 angeordnet ist, an einer inneren Stufe 49 des Gehäuseoberteils 3 anliegt (s. Fig. 1).

Über eine Öffnung 51 der Scheibe 39 ist der innere Filterhohlraum 33, d.h. die Reinseite der Vorrichtung, in unmittelbarer Verbindung mit einem an die Scheibe 39 unmittelbar angeformten zylindrischen Topf 53 mit geschlossenem Topfboden 55. Der Topf 53 bildet, wie später noch besprochen, einen Sammelraum, der hier als zweiter Sammelraum 36 bezeichnet ist, für aus dem inneren Filterhohlraum 33 abfließendes Fluid, d.h. im vorliegenden Falle von Öltröpfchen, die am Filtermedium 35 durch Koaleszenz aus dem Erdgasstrom abgeschieden sind. In einem axialen Abstand von der Scheibe 39 ist am Topf 53 eine zweite Scheibe 57 einstückig angeformt, die sich in paralleler Ebene zur ersten Scheibe 39 erstreckt und einen geringfügig kleineren Durchmesser als letztere besitzt. Die zweite Scheibe 57 weist wie die erste Scheibe 39 Durchlässe 59 auf. Die Scheiben 39 und 57 fungieren als Trennelemente und begrenzen als obere Wand bzw. untere Wand den zwischen ihnen befindlichen Einströmraum 61, in dem die erste Stufe des Abscheidevorganges stattfindet.

Die Fig. 1 und 4 zeigen das Filterelement 31 in seiner eingebauten Funktionsposition. Bei in das Gehäuseoberteil 3 eingeschraubtem Verschlussteil 5 liegt dieses mit seinem Endrand 11 an der zweiten Scheibe 57 an. Gleichzeitig ist der Boden 55 des Topfes 53 in Anlage am Bodenteil 13 des Verschlussteils 5. Dadurch sind die Stufen 47 und 49 an der oberen Scheibe 39 bzw. dem Gehäuseoberteil 3 miteinander in Anlage und der Stutzen 25 des Filterelements 31 ist in der als Elementaufnahme dienenden Erweiterung 23 am Ausströmanschluss 15 gesichert. Wie die Fig. 1 und 4 zeigen, mündet der Gehäuseeingang 19 mit der mit 63 bezeichneten Einströmöffnung derart tangential zur Innenwand 65 in den Einströmraum 61, dass in diesem eine Drallströmung erzeugt wird. In der im Einströmraum 61 erfolgenden ersten Abscheidestufe erfolgt daher die Phasentrennung nach Art eines Zyklonabscheiders durch Zentrifugalwirkung. Das so abgeschiedene Fluid fließt über die Durchlässe 59 der unteren Scheibe 57 in den ersten Sammelraum 67 ab, der im Verschlussteil 5 die Außenseite des Topfes 53 umgibt, der an seinem Boden 55 zwischen vom Bodenbereich 13 des Verschlussteils 5 nach innen vorstehenden Zentrierkörpern 69 gehalten ist.

## Patentansprüche

1. Vorrichtung zum Abscheiden von in gasförmigen Medien enthaltenen Fluiden, insbesondere von Öl aus Gaskraftstoffen für Verbrennungsmotoren, mit einem Gehäuse (1), das einen Einströmraum (61) für das über einen Gehäuseeingang (19) einströmende Medium aufweist, wobei der Einströmraum (61) durch Trennelemente (39, 57) von einem Fluidsammelraum (67), in den im Einströmraum (61) abgeschiedenes Fluid über Durchlässe (59) des Trennelementes (57) durch Schwerkraftwirkung einströmbar ist, und von einem Filterraum getrennt ist, in dem ein Abscheideeigenschaften aufweisendes Filterelement (31) vom Medienstrom durchströmbar ist, der über Durchlässe (43) des Trennelementes (39) eintritt, und wobei sich an die Reinseite (33) des Filterelementes (31) ein Ausströmanschluss (15) für das gereinigte Medium sowie ein zweiter Fluidsammelraum (36, 53) anschließen, in den am Filterelement (31) abgeschiedenes Fluid durch Schwerkraftwirkung einfließt, **dadurch gekennzeichnet, dass** der in den Einströmraum (61) führende Gehäuseeingang (19, 63) derart tangential zur Innenwand (65) des Einströmraumes (61) gerichtet ist, dass in diesem eine eine Fluidabscheidung durch Zentrifugalkräfte bewirkende Drallströmung erzeugt ist, und dass der zweite Fluidsammelraum (36, 53) mit dem Filterelement (31) ein einstückiges Bauteil bildet.

2. Vorrichtung nach Anspruch 1, **dadurch gekennzeichnet, dass** die Wände des Einströmraumes (61), die die Trennelemente (39, 57) zwischen Einströmraum (61) und dem Filterraum sowie dem ersten Fluidsammelraum (67) bilden, einstückige Bestandteile des Filterelementes (31) sind.

3. Vorrichtung nach Anspruch 1 oder 2, **dadurch gekennzeichnet, dass** das bei der Filtration von seiner Außenseite zu seinem inneren Filterhohlraum (33) hin durchströmbare Filterelement (31) auf einer die obere Wand des Einströmraumes (61) bildenden Scheibe (39) angeordnet ist, die am unteren Ende des Filterhohlraumes (33) eine Öffnung (51) besitzt, an die sich der zweite Fluidsammelraum (36) in Form eines sich entlang der Hochachse (21) des Filterelementes (31) erstreckenden, mit der Scheibe (39) einstückigen Topfes (53) anschließt.

4. Vorrichtung nach Anspruch 3, **dadurch gekennzeichnet, dass** die untere Wand des Einströmraumes (61) durch eine zweite, sich einstückig an die Außenseite des Topfes (53) anschließende Scheibe (57) gebildet ist.

5. Vorrichtung nach Anspruch 3 oder 4, **dadurch gekennzeichnet, dass** das Gehäuse (1) ein glockenartiges Oberteil (3) mit dem Ausströmanschluss (15), mit dem das obere Ende des Filterhohlraumes (33) des in Funktionsposition befindlichen Filterelementes (31) in abgedichtete Fluidverbindung kommt, sowie an seiner Innenseite eine Stufe (49) für die Anlage des Umfangsrandes (45, 47) der ersten, oberen Scheibe (39) aufweist.

6. Vorrichtung nach Anspruch 4 oder 5, **dadurch gekennzeichnet, dass** das Gehäuse (1) ein Verschlussteil (5) aufweist, das unter Bildung einer Abdichtung (17) in das untere, offene Ende des glockenartigen Oberteils (3) derart einschraubbar ist, dass es mit seinem Endrand (11) an der unteren, zweiten Scheibe (57) anliegt.

7. Vorrichtung nach Anspruch 6, **dadurch gekennzeichnet, dass** das Verschlussteil (5) an seinem Bodenteil (13) nach innen vorstehende Zentrierkörper (69) aufweist, zwischen denen der Bodenbereich (55) des den zweiten Fluidsammelraum (36) bildenden Topfes (53) zentriert aufnehmbar ist, und dass der übrige, den Topf (53) umgebende Innenraum des Verschlussteils (5) den ersten Fluidsammelraum (67) bildet.

## Claims

1. A device for separating fluids contained in gaseous media, in particular oil from gas fuels for combustion engines, comprising a housing (1) that has an inflow area (61) for the medium flowing in via a housing input (19), the inflow area (61) being separated by separation elements (39, 57) from a fluid collection area (67), into which fluid separated in the inflow area (61) can flow via passages (59) in the separation element (57) by a gravitational effect, and from a filter area in which medium can flow through a filter element (31) that has separating properties, which medium flow enters via passages (43) in the separation element (39), and an outflow connection (15) for the cleaned medium and a second fluid collection area (36, 53) into which fluid separated on the filter element (31) flows by a gravitational effect adjoining the clean side (33) of the filter element (31), **characterised in that** the housing input (19, 63) leading into the inflow area (61) is directed tangentially to the inner wall (65) of the inflow area (61) such that a spin flow causing fluid separation by centrifugal forces is generated in the inflow area, and that the second fluid collection area (36, 53) with the filter element (31) forms a one-piece component.

2. The device according to Claim 1, **characterised in that** the walls of the inflow area (61), which form the separation elements (39, 57) between the inflow area (61) and the filter area and the first fluid collection area (67), are one-piece components of the filter element (31).

3. The device according to Claim 1 or 2, **characterised in that** the filter element (31) through which a flow can pass from its outside to its inner filter cavity (33) during filtration is disposed on a disc (39) forming the upper wall of the inflow area (61) and which has an opening (51) on the lower end of the filter cavity (33), adjoining which is the second fluid collection area (36) in the form of a cup (53), made integrally with the disc (39), extending along the vertical axis (21) of the filter element (31).

4. The device according to Claim 3, **characterised in that** the lower wall of the inflow area (61) is formed by a second disc (57) integrally adjoining the outside of the cup (53).

5. The device according to Claim 3 or 4, **characterised in that** the housing (1) has a bell-like upper part (3) with the outflow connection (15) with which the upper end of the filter cavity (33) of the filter element (31) in the functional position comes into sealed fluid communication, and on its inside has a step (49) for supporting the peripheral edge (45, 47) of the first, upper (39) disc.

6. The device according to Claim 4 or 5, **characterised in that** the housing (1) has a closure part (5) which can be screwed, forming a seal (17), into the lower, open end of the bell-like upper part (3) such that it rests against the lower, second disc (57) with its end edge (11).

7. The device according to Claim 6, **characterised in that** the closure part (5) has inwardly protruding centring bodies (69) on its bottom part (13), between which the bottom region (55) of the cup (53) forming the second fluid collection area (36) can be received in a centred manner, and that the rest of the internal area of the closure part (5) that surrounds the cup (53) forms the first fluid collection area (67).

## Revendications

1. Dispositif pour séparer des fluides comprenant des milieux gazeux, notamment de l'essence, de carburants gazeux pour des moteurs à combustion interne, comprenant une enveloppe (1), qui a un espace (61) d'entrée du fluide entrant par une entrée (19) de l'enveloppe, l'espace (61) d'entrée étant séparé par des éléments (39, 57) de séparation d'un espace (67) d'accumulation de fluide, dans lequel du fluide séparé dans l'espace (61) d'entrée peut entrer par des passages (59) de l'élément (57) de séparation, par l'effet de la force de gravité, et d'un espace de filtration, dans lequel un élément (31) de filtre, ayant des propriétés de séparation, peut être traversé par un courant de milieux, qui entre par des passages (43) de l'élément (39) de séparation et dans lequel, au côté (33) propre de l'élément (31) de filtre, se raccorde un raccord (15) de sortie du fluide épuré, ainsi qu'un deuxième espace (36, 53) de collecte de fluide, dans lequel du fluide séparé à l'élément (31) de filtre entre, par l'effet de la force de la gravité, **caractérisé en ce que** l'entrée (19, 63) de l'enveloppe, menant à l'espace (61) d'entrée, est dirigée tangentiellement à la paroi (65) intérieure de l'espace (61) d'entrée, de manière à y produire un écoulement avec torsion provoquant une séparation de fluide par des forces centrifuges et **en ce que** le deuxième espace (36, 53) de collecte de fluide forme, avec l'élément (31) de filtre, un élément constitutif d'une seule pièce.

2. Dispositif suivant la revendication 1, **caractérisé en ce que** les parois de l'espace (61) d'entrée, qui forment les éléments (39, 57) de séparation entre l'espace (61) d'entrée et l'espace de filtration ainsi que le premier espace (67) de collecte de fluide, sont des parties constitutives d'une seule pièce de l'élément (31) de filtre.

3. Dispositif suivant la revendication 1 ou 2, **caractérisé en ce que**, lors de la filtration, l'élément (31) de filtre, pouvant être traversé de son côté extérieur à sa cavité (33) intérieure de filtre, est disposé sur un disque (39) formant la paroi supérieure de l'espace (61) d'entrée et ayant, à l'extrémité inférieure de la cavité (33) de filtre, une ouverture (51), à laquelle se raccorde le deuxième espace (36) de collecte de fluide, sous la forme d'un pot (53) d'une seule pièce avec le disque (39) et s'étendant suivant l'axe (21) vertical de l'élément (31) de filtre.

4. Dispositif suivant la revendication 3, **caractérisé en ce que** la paroi inférieure de l'espace (61) d'entrée est formée par un deuxième disque (57) se raccordant d'une seul pièce au côté extérieur du pot (53).

5. Dispositif suivant la revendication 3 ou 4, **caractérisé en ce que** l'enveloppe (1) a une partie (3) supérieure en forme de cloche, ayant le raccord (15) de sortie, par lequel l'extrémité supérieure de la cavité (33) de filtre de l'élément (31) de filtre se trouvant en position de fonctionnement, vient en liaison fluidique rendue étanche ainsi que sur son côté intérieure, un palier (49) pour l'application du bord (45, 47) périphérique du premier disque (39) supérieur.

6. Dispositif suivant la revendication 4 ou 5, **caractérisé en ce que** l'enveloppe (1) a une partie (5) de fermeture, qui, en formant une étanchéité (17), peut se visser dans l'extrémité inférieure ouverte de la partie (3) supérieure en forme de cloche, de manière à s'appliquer, par son bord (11) d'extrémité, au deuxième disque (57) inférieur.

7. Dispositif suivant la revendication 6, **caractérisé en ce que** la partie (5) de fermeture a, à sa partie (13) de fond, des corps (69) de centrage en saillie à l'intérieur, entre lesquels la partie (55) de fond du pot (53), formant le deuxième espace (36) de collecte de fluide, peut être reçue de manière centrée et **en ce que** l'espace intérieur restant, entourant le pot (53) de la partie (5) de fermeture, forme le premier espace (67) de collecte de fluide.
